(19) **Europäisches Patentamt**
**European Patent Office**
**Office européen des brevets**

(11)　**EP 4 717 728 A1**

(12)　# EUROPEAN PATENT APPLICATION

(43) Date of publication:
**01.04.2026  Bulletin 2026/14**

(21) Application number: **24203254.8**

(22) Date of filing: **27.09.2024**

(51) International Patent Classification (IPC):
*C08J 5/18* (2006.01)　　*C08L 23/12* (2006.01)
*H01G 4/18* (2006.01)

(52) Cooperative Patent Classification (CPC):
**C08J 5/18; C08L 23/12; H01G 4/18;** C08J 2323/12;
C08J 2467/02

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Borealis GmbH**
**1020 Vienna (AT)**

(72) Inventors:
• **Tranchida, Davide**
**4021 Linz (AT)**

• **Gkourmpis, Thomas**
**444 86 Stenungsund (SE)**
• **Schaffer, Walter**
**4021 Linz (AT)**
• **Gitsas, Antonios**
**4021 Linz (AT)**
• **Jamieson, Scott**
**4021 Linz (AT)**

(74) Representative: **Ter Meer Steinmeister & Partner
Patentanwälte mbB
Nymphenburger Straße 4
80335 München (DE)**

(54)　**BLENDS OF POLYPROPYLENE AND POLYBUTYLENE TEREPHTHALATE FOR IMPROVED ELECTRICAL CONDUCTIVITY IN CAPACITOR APPLICATIONS**

(57)　The present invention relates to a polypropylene composition comprising more than 80.0 to less than 100.0 wt.-% based on the total weight of the polypropylene composition of a high isotactic homopolymer of propylene (A), and more than 0.0 to less than 20.0 wt.-% based on the total weight of the polypropylene composition of a polybutylene terephthalate (B). The composition allows the achievement of electrical conductivities which are desirable for high temperature capacitor film applications. The present invention is also directed to a film comprising the polypropylene composition as well as the use of the polypropylene composition to prepare a capacitor film. Furthermore, the invention relates to a biaxially oriented film comprising the polypropylene composition as well as a method for preparing a biaxially oriented film comprising the polypropylene composition. Additionally, a capacitor comprising the biaxially oriented film is provided.

EP 4 717 728 A1

**Description**

**Field of the Invention**

The present invention relates to a polypropylene composition comprising more than 80.0 to less than 100.0 wt.-% based on the total weight of the polypropylene composition of a high isotactic homopolymer of propylene (A), and more than 0.0 to less than 20.0 wt.-% based on the total weight of the polypropylene composition of a polybutylene terephthalate (B). The composition allows the achievement of electrical conductivities which are desirable for high temperature capacitor film applications. The present invention is also directed to a film comprising the polypropylene composition as well as the use of the polypropylene composition to prepare a capacitor film. Furthermore, the invention relates to a biaxially oriented film comprising the polypropylene composition as well as a method for preparing a biaxially oriented film comprising the polypropylene composition. Additionally, a capacitor comprising the biaxially oriented film is provided.

**Technical Background**

Polypropylene combines low losses with good stretchability and a high melting point. Due to this favorable combination of properties, it has been successfully used as a dielectric in various capacitor film applications. Yet, an issue with known polypropylene capacitor grades is their limited maximum operating temperature. The new generation of inverters, for example traction inverters for electric mobility and inverters for renewable power such as solar and wind, call for a higher temperature resistance of capacitor films.

The demand for an increased maximum operating temperature or - differently speaking - the demand for a higher durability at a predetermined temperature level, has been addressed in a variety of ways up to now.

CN101724195 A proposes to combine polypropylene with a composite rubber powder at a weight ratio of 100 : 0.01 - 2.0. The composite rubber powder has a particle size of 20 to 100 nm and consists of a silicone rubber powder and a nucleating agent at a weight ratio of 99 : 1 to 90 : 10. It is prepared by mixing silicon rubber latex, obtained via irradiation vulcanization, with an aqueous solution or emulsion of the nucleating agent.

EP 2 995 641 A1 teaches that a high temperature resistance can be accomplished by combining beta-nucleation of polypropylene having high purity with a long chain branched polypropylene. More specifically, it provides a polypropylene composition comprising 95.0 to 99.9 wt.-% of propylene homopolymer with a specific melt flow rate and a very low ash content, 0.1 to 5.0 wt.-% of long chain branched polypropylene and up to 1000 ppm of beta-nucleating agent.

WO 2018/210854 A1 and WO 2018/197034 A1 disclose that it may be preferable to blend polypropylene with certain amounts of specific cyclic olefin copolymers to obtain materials that are suitable for high temperature capacitor applications. In this context, WO 2018/210854 A1 relies on ethylene norbornene copolymers with specific norbornene contents, whereas WO 2018/197034 A1 suggests cyclic olefin polymers having a glass transition temperature in a broad range from 120 to 170 °C.

A non-published EP application (application no. 24 181 730) discloses a polypropylene composition comprising high isotactic polypropylene and polycarbonate. The addition of polycarbonate lowers the high temperature electrical conductivity of films containing the composition.

However, in the above outlined approaches the increase in the temperature resistance of polypropylene capacitor compositions has only been achieved at the expense of other crucial properties. For example, mechanical properties such as low shrinkage and high stiffness as well as the capability to endure high voltages have been sacrificed to a certain extent.

Apart from the above, there is documentation about fundamental research concerned with blends of polypropylene and other polymers, such as polybutylene terephthalate.

CN 105837951 A discloses a compatibilization technique for polypropylene/polybutylene terephthalate blends which uses a graft masterbatch prepared with polypropylene and melt grafted diallyl phthalate. Among the studied examples, compatibilized blends containing 20 parts polybutylene terephthalate and 10-20 parts compatibilizer in 60-70 parts of a copolymerised polypropylene are investigated with respect to their mechanical properties.

Thus, there is still a need to provide polypropylene compositions having an improved property set for capacitor applications, *i.e.* composition having a high temperature resistance, and a low electrical conductivity. Ideally, the polypropylene composition should also retain the good mechanical properties of pure polypropylene. Accordingly, it is an objective of the present invention to overcome the disadvantages of known compositions and to provide an according polypropylene composition. Another objective of the present invention is the provision of a polypropylene film having superior performance in capacitor applications. Last but not least, the present invention aims at providing a capacitor with improved specifications. Furthermore, capacitor films also need to have a low electrical conductivity and good mechanical properties such as a low shrinkage and a high stiffness.

## Summary of the Invention

The above identified needs are satisfied by the polypropylene composition according to claim 1, the use according to claim 6, the film according to claim 7, the method according to claim 12, the biaxially oriented film according to claim 13, and the capacitor according to claim 14. Advantageous embodiments may be derived from the dependent claims.

## Detailed Description of the Embodiments

The polypropylene composition according to the present invention comprises more than 80.0 to less than 100.0 wt.-%, based on the total weight of the polypropylene composition, of a high isotactic homopolymer of propylene (A), and more than 0.0 to less than 20.0 wt.-%, based on the total weight of the polypropylene composition, of a polybutylene terephthalate (B). The contents of components (A) and (B) preferably add up to 100 wt.-%. With these ratios of components, the composition exhibits less temperature dependent electrical conductivities. This makes the compositions suitable for high temperature capacitor film applications.

In an embodiment, the polypropylene composition comprises more than 80.0 to less than 99.5 wt.-%, preferably more than 82.5 to less than 98.0 wt.-%, more preferably 85.0 or more to 95.0 wt. % or less, in particular 88.0 or more to 93.0 wt. % or less, based on the total weight of the polypropylene composition, of the high isotactic homopolymer of propylene (A), and more than 0.5 to less than 20.0 wt.-%, preferably more than 2.0 to less than 17.5 wt.-%, more preferably 5.0 or more to 15.0 wt. % or less, in particular 7.0 or more to 12.0 wt. % or less, based on the total weight of the polypropylene composition, of the polybutylene terephthalate (B). In these preferred embodiments, electrical conductivity of the composition at high temperature is further improved, *i.e.* lowered.

In a further embodiment, the polypropylene composition according to the present invention consists of more than 80.0 to less than 99.5 wt.-%, preferably more than 82.5 to less than 98.0 wt.-%, more preferably 85.0 or more to 95.0 wt. % or less, in particular 88.0 or more to 93.0 wt. % or less, based on the total weight of the polypropylene composition, of a high isotactic homopolymer of propylene (A), and more than 0.5 to less than 20.0 wt.-%, preferably more than 2.0 to less than 17.5 wt.-%, more preferably 5.0 or more to 15.0 wt. % or less, in particular 7.0 or more to 12.0 wt. % or less, based on the total weight of the polypropylene composition, of a polybutylene terephthalate (B).

Adding a polybutylene terephthalate (B) to a high isotactic homopolymer of propylene (A) is technically advantageous because the polybutylene terephthalate (B) partially compensates for the increase of electrical conductivity with temperature which is inherent to the high isotactic homopolymer of propylene (A). Moreover, the combination of a polybutylene terephthalate (B) and a high isotactic homopolymer of propylene (A) results in favorable mechanical properties and, thus, facilitates the processing of the composition into films for capacitor applications.

In a preferred embodiment, the polypropylene composition according to the invention is obtained by melt-blending the high isotactic homopolymer of propylene (A) and the polybutylene terephthalate (B). A device, in which melt-blending can be carried out, may be selected from the group consisting of kneaders, mills and extruders.

In contrast to dry-blending approaches, the melt-blending approach allows producing the polypropylene composition with high homogeneity. By selecting the content of the polybutylene terephthalate (B) to be more than 0.0 to less than 20.0 wt.-%, the polybutylene terephthalate (B) is rather uniformly dispersed in a matrix of the high isotactic homopolymer of propylene (A) despite the limited miscibility of the two components. The dimensions and the shape of the domains which are formed by the polybutylene terephthalate (B) in the composition can be analyzed with an atomic force microscope (AFM) or another type of microscope.

The polypropylene composition preferably has a crystallization peak temperature, measured according to ISO 11357, of from 115 to 145 °C, more preferably of from 120 to 140 °C, even more preferably of from 125 to 135 °C; and/or a melting temperature, measured according to ISO 11357, of from 165 to 175 °C, more preferably of from 165 to 170 °C.

### Component (A)

The expression "homopolymer of propylene (A)" as used in the present invention relates to a polypropylene that consists substantially, *i.e.* of at least 99.5 wt.-%, more preferably of at least 99.8 wt.-%, of propylene units. Preferably, only propylene units are detectable in the propylene homopolymer via $^{13}C$ NMR spectroscopy, as described in the example section below.

The high isotactic homopolymer of propylene (A) preferably is a linear polypropylene, *i.e.* a polypropylene that does not have a detectable amount of long-chain or short-chain branches.

In a preferred embodiment of the present invention, the high isotactic homopolymer of propylene (A) is characterized by a rather high pentad isotacticity <mmmm>, measured by $^{13}C$ NMR. More specifically, the high isotactic homopolymer of propylene (A) may have an isotactic pentad fraction of from 93.0 to 99.5 %, preferably 95.0 to 99.0 %, more preferably from 96.0 to 98.5 %. In particular embodiments, the pentad isotacticity of the high isotactic homopolymer of propylene (A) is in the range of 96.0 to 98.5 %, still more preferably in the range of 97.0 to 98.0 %.

The high isotacticity preferably goes along with a high crystallinity of the material. Moreover, the high isotacticity is preferably accompanied by a low xylene cold soluble (XCS) content. Therefore, in a further preferred embodiment of the present invention, the high isotactic homopolymer of propylene of the present invention has a rather low XCS content, *i.e.* by a XCS content of equal or below 2.0 wt.-%, more preferably of equal or below 1.8 wt.-%, yet more preferably equal or below 1.6 wt.-%. Thus, it is particularly appreciated that the high isotactic homopolymer of propylene of the present invention has a XCS content in the range of 0.3 to equal or below 2.5 wt.-%, more preferably in the range of 0.3 to equal or below 2.0 wt.-%, yet more preferably in the range of 0.4 to equal or below 1.8 wt.-%.

Preferably, the XCS content refers to the XCS content as determined at 23 °C according to ISO 6427. It is further appreciated that the XCS content indicates that the high isotactic homopolymer of propylene is preferably free of any elastomeric polymer component, like an ethylene propylene rubber. In other words, the high isotactic homopolymer of propylene does not correspond to a heterophasic polypropylene, i.e. a system consisting of a polypropylene matrix in which an elastomeric phase is dispersed. Such systems usually have a rather high xylene cold soluble content.

As an alternative to 13C NMR, the isotacticity of polypropylene can also be measured by infrared spectroscopy (IR) techniques, such as the technique disclosed in US 3511824 A. The isotacticity values obtained by such IR techniques have proven to be equivalent to those obtained by the 13C NMR techniques described herein.

The use of high isotactic polypropylene is advantageous because it is associated with an appropriate isotacticity. A too low content of isotactic pentad fraction has a consequence that the final crystallinity of a film made from the composition becomes rather low, and the tensile properties and moduli of the film decrease. On the other hand, a too high content of isotactic pentad fraction has the consequence that there may be frequent film breaks once the composition is used for making films that are orientated in machine direction and/or transverse direction.

Alternatively, or in addition, it is preferred that the high isotactic homopolymer of propylene (A) of the present invention has a melt flow rate given in a specific range. Preferably, the high isotactic homopolymer of propylene has a $MFR_2$ (2.16 kg, 230 °C), measured according to ISO 1133, of from 0.4 to 10 g/10 min, preferably of from 0.5 to 5 g/10 min. In a particularly preferred embodiment, the high isotactic homopolymer of propylene (A) has a $MFR_2$ (2.16 kg, 230 °C), measured according to ISO 1133, of from 2.0 to 4.5 g/10 min. In this context, it is acknowledged that $MFR_2$ (2.16 kg, 230 °C) denotes a melt flow rate measured under a load of 2.16 kg at 230 °C.

The high isotactic homopolymer of propylene (A) preferably has a polydispersity, expressed as Mw/Mn and determined by means of Gel Permeation Chromatography according to ISO 16014-1:2019, of more than 6.5, preferably of more than 7.5 to 20, in particular of from 8 to 15, such as from 9 to 12.

Furthermore, the high isotactic homopolymer of propylene (A) preferably has an ash content of 60 ppm or less, more preferably from 5 ppm or more to 30 ppm or less. Preferably, the ash content may be in a range from 10 to 20 ppm. A low ash content is crucial for the dielectric properties, such as the dielectric strength and the dielectric loss. The ash content may be measured according to ISO 3451-1 (1997).

The crystallization temperature, Tc, of the high isotactic homopolymer of propylene (A) as measured according to ISO 11357 may be of from 110 °C or more to 140 °C or less, preferably of from 115 °C or more to 140 °C or less, more preferably of from 120 °C or more to 140 °C or less. Besides that, the high isotactic homopolymer of propylene may have a melting temperature, Tm, measured according to ISO 11357, of from 165 °C or more to 170 °C or less, preferably of from 165 °C or more to 170 °C or less.

Additives

The high isotactic homopolymer of propylene (A) may also comprise one or more additives. Preferably the one or more additives are present in a content from 0 to 2.0 wt.-%, more preferably in an amount from 0.05 to 1.0 wt.-%, in particular in an amount from 0.05 to 0.5 wt.-%, based on the weight of the high isotactic homopolymer of propylene (A).

The one or more additives may be non-polymeric additives and/or polymeric additives, with non-polymeric additives being preferred. For example, the one or more additives may be selected from the group consisting of antioxidants, stabilizers, acid scavengers, nucleating agents, colorants, plasticizers, slip agents, antiscratch agents, lubricants, pigments, antistatic agent, and the like. It is particularly preferred when the one or more additives are selected from the group consisting of antioxidants, stabilizers and acid scavengers and combinations thereof.

The antioxidants and stabilizers may be selected from the group of hindered phenols and more preferably from the group of hindered phenols not containing phosphorous or sulphur.

The antioxidants and stabilizers are especially preferably one or more compounds selected from the group consisting of 1,3,5-trimethyl-2,4,6-tris(3,5-di-tert-butyl-4-hydroxybenzyl)benzene (sold under trade names Irganox 1330, Anox 330, Ethanox 330 and Kinox-30), pentaerythritol tetrakis(3-(3,5-di-tert-butyl-4-hydroxyphenyl)propionate) (sold under trade names Irganox 1010, Anox 20, Ethanox 310TF and Kinox-10), octadecyl 3-(3',5'-di-tert-butyl-4-hydroxyphenyl)propionate (sold under trade names Irganox 1076, Anox PP 18 and Kinox-16), butylhydroxytoluene (sold under trade names Ionol CP and Vulkanox BHT), 1,3,5-tris(3',5'-di-tert-butyl-4'-hydroxybenzyl)-isocyanurate (sold under trade names Irganox 3114, Anox IC-14, Ethanox 314 and Kinox-34), and 3,4-dihydro-2,5,7,8-tetramethyl-2-(4,8,12-trimethyltridecyl)-2H-1-benzopyran-6-ol (sold under trade names Irganox E 210 and alpha-tocopherol).

The antioxidants and stabilizers are preferably present in a total amount of from 500 to 8000 ppm, based on the total weight of the high isotactic homopolymer of propylene (A). More preferably, antioxidants and stabilizers are present in a total amount of from 800 to 7000 ppm, still more preferably of from 1000 to 6000 ppm, and in particular from 1500 to 6000 ppm, based on the total weight of the high isotactic homopolymer of propylene (A). In view of the desired application of the composition in the capacitor field, the antioxidants and stabilizers preferably do not contain phosphorous containing secondary antioxidants, such as tris(2,4-ditert-butylphenyl)phosphite. Without wishing to be bound by theory, the latter compounds are believed to increase the dissipation in the final capacitor.

Acid scavengers may be salts of organic acids, such as stearates. They typically serve to neutralize acids in a polymer. Examples of such compounds are calcium stearate, zinc stearate and zinc oxide. Acid scavengers are preferably used in an amount of from 20 ppm to 2000 ppm, more preferably from 50 ppm to 1000 ppm, most preferably from 60 to 600 ppm, based on the total weight of the high isotactic homopolymer of propylene (A).

Thus, the one or more additives may, for example, be selected from the group consisting of pentaerythritol tetrakis(3-(3,5-di-tert-butyl-4-hydroxyphenyl)propionate) (sold under trade names Irganox 1010 Anox 20, Ethanox 310TF and Kinox-10), butylhydroxytoluene (sold under trade names Ionol CP and Vulkanox BHT), calcium stearate and combinations thereof.

Component (B)

In the polypropylene composition polybutylene terephthalate (B) is preferably dispersed in a matrix of the high isotactic homopolymer of propylene (A), hereinafter also referred to as polypropylene matrix.

The use of more than 0.0 to less than 20.0 wt.-% based on the total weight of the polypropylene composition of a polybutylene terephthalate (B) allows for the improvement of electrical properties, when compared to neat polypropylene. Specifically, the inclusion of more than 0.0 to less than 20.0 wt.-% based on the total weight of the polypropylene composition of a polybutylene terephthalate (B) allows for a reduction in electrical conductivity in comparison to polypropylene compositions comprising polyolefins as the only polymeric components.

The use of more than 0.0 to less than 20.0 wt.-% based on the total weight of the polypropylene composition of a polybutylene terephthalate also allows for the increase of the crystallization temperature of the polypropylene. Without wishing to be bound by theory, it is believed that the polybutylene terephthalate serves as a nucleating agent when combined and/or blended with polypropylene and results in an increased degree of crystallinity of the polypropylene. The change in the final properties of the polypropylene composition may be accompanied by a change in the morphology of the polypropylene matrix.

Additionally, polybutylene terephthalate is a semi-crystalline material with a high melting temperature (about 223 °C). Further, polybutylene terephthalate has a high stability at high temperatures.

Additionally, the dispersion of polybutylene terephthalate particles in the polypropylene matrix contributes the mentioned advantages to the properties of the films, while preserving the high processability of the polypropylene.

The use of polybutylene terephthalate in amounts of 20.0 wt.-% or higher does not further improve the electrical properties at high temperature. A clearly predominant portion of polypropylene is preferred in order to maintain the good processing behaviour of the final polypropylene composition. Therefore, a preferred embodiment has less than 17.5 wt.-%, preferably 15.0 wt. % or less, based on the total weight of the polypropylene composition of the polybutylene terephthalate (B).

In a preferred embodiment of the present invention, the polybutylene terephthalate (B) has an Izod impact strength, measured according to ASTM D256, of from 45 to 75 J/m.

Alternatively, or in addition, it is preferred that the polybutylene terephthalate (B) of the present invention has a density measured according to ISO 1183 of from 1.2 to 1.5 $g/cm^3$, more preferably of from 1.3 to 1.4 $g/cm^3$. Even more preferably, the polybutylene terephthalate (B) of the present invention has a density measured according to ISO 1183 of about 1.31 $g/cm^3$.

The polybutylene terephthalate (B) may also comprise one or more additives as described above for component (A), such as antioxidants.

Film

The present invention furthermore provides a film comprising the polypropylene composition as described above. The present invention also provides a use of the polypropylene composition as described above for the preparation of a capacitor film.

The film may be a compression moulded film. In this case, the film may be produced by means of a mould with a thickness of 10 to 300 $\mu$m, preferably with a thickness of 10 to 100 $\mu$m, more preferably with a thickness of 20 to 80 $\mu$m, in

particular with a thickness of 60 $\mu$m, and at a temperature in a range from 190 to 230 °C. Alternatively, the film may be a cast film.

The film preferably has a thickness from 1 to 1000 $\mu$m, more preferably from 1 to 300 $\mu$m, most preferably from 1 to 250 $\mu$m, in particular from 1 to 100 $\mu$m. This is especially advantageous since current attempts are to provide electric systems with higher energy density and efficiency. Reducing the space requirement for a film in film capacitors helps to achieve this goal.

In an embodiment, the film comprises at least 80 wt.-%, more preferably comprises at least 90 wt.-%, yet more preferably consists of, the polypropylene composition as defined in the present invention.

In an embodiment, the film has an electrical conductivity of less than $6.0 \cdot 10^{-14}$ S/cm, preferably less than $5.0 \cdot 10^{-14}$ S/cm, more preferably in a range of from more than $8.0 \cdot 10^{-15}$ S/cm to less than $3.0 \cdot 10^{-14}$ S/cm, wherein the electrical conductivity is measured by means of a dielectric spectrometer with an alternating current at a frequency of $10^{-2}$ Hz at a temperature of 140 °C and on the film having a thickness of 100 $\mu$m.

In another embodiment, the film has an electrical conductivity of less than $1.0 \cdot 10^{-14}$ S/cm, preferably less than $9.0 \cdot 10^{-15}$ S/cm, more preferably in a range of from more than $1.0 \cdot 10^{-15}$ S/cm to less than $7.0 \cdot 10^{-15}$ S/cm, wherein the electrical conductivity is measured by means of a dielectric spectrometer with an alternating current at a frequency of $10^{-2}$ Hz at a temperature of 130 °C and on the film having a thickness of 100 $\mu$m.

In yet another embodiment, the film has an electrical conductivity of less than $8.0 \cdot 10^{-16}$ S/cm, preferably less than $5.0 \cdot 10^{-16}$ S/cm, wherein the electrical conductivity is measured by means of a dielectric spectrometer with an alternating current at a frequency of $10^{-2}$ Hz at a temperature of 20 °C and on the film having a thickness of 100 $\mu$m.

The morphology of the films of the present invention can be analysed using atomic force microscopy (AFM). In an embodiment, the average diameter of the domains of the polybutylene terephthalate (B) visually determined in AFM images of 10x10 $\mu$m$^2$ cut-outs of the film with a thickness of 300 $\mu$m is less than 3.5 $\mu$m, preferably in a range of from 0.5 to less than 3.5 $\mu$m, more preferably in a range of from 1.5 to 3.0 $\mu$m. The average diameter may be based on an evaluation of more than 30 samples. The average diameter of the domains of the polybutylene terephthalate (B) as visually determined in AFM images of 10x10 $\mu$m$^2$ cut-outs of the film with a thickness of 300 $\mu$m may be equivalent to the average diameter of the domains of the polybutylene terephthalate (B) as visually determined in AFM images of extruded strands of the polypropylene composition.

Biaxially oriented film

The present invention furthermore provides a biaxially oriented film (BOPP) comprising the polypropylene composition as described above or obtained from the film as described above. In particular, the film can be a cast film that has been biaxially oriented (BOPP).

The present invention also provides a method for preparing a biaxially oriented film from a non-oriented film comprising the polypropylene composition described above, wherein the film is stretched with a stretching ratio of at least 2.5 times in the machine direction and a stretching ratio of at least 2.5 times in the transverse direction. Preferably the non-oriented film comprising the polypropylene composition described above is stretched with a stretching ratio of from 7 to 12 times in the machine direction and of from 3 to 7 times in the transverse direction.

The biaxially oriented film according to the present invention may be obtained in two steps. In a first step, a non-oriented film is produced by extruding the polypropylene composition through a flat die. In a second step, the non-oriented film is stretched in machine direction (MD) and transverse direction (TD). The stretching or orientation of the non-oriented film may be performed simultaneously in machine direction and transverse direction. The two steps of the method may preferably be conducted in a continuous process. Alternatively, the non-oriented film may be collected and cooled with a rotating chill roll for solidification of the film and may later on be stretched.

In an embodiment, the biaxially oriented polypropylene film comprises at least 80 wt.-%, more preferably comprises at least 90 wt.-%, yet more preferably consists of, the polypropylene composition as defined in the present invention. The biaxially oriented polypropylene film preferably has a stretching ratio of at least 2.5 times, preferably at least 3.0 times, more preferably at least 4 times, in particular at least 5 times, in the machine direction and at least 2.5 times, preferably at least 3.0 times, more preferably at least 4 times, in particular at least 5 times, in the transverse direction, more preferably has a stretching ratio of at least 9 times in the machine direction and at least 5 times in the transverse direction.

The biaxially oriented polypropylene film can be prepared by conventional drawing processes known in the art. Accordingly, the process for the manufacture of a biaxially oriented polypropylene film preferably may make use of the tenter method known in the art.

The tenter method is a method in which the polypropylene composition as defined herein is melt extruded from a slit die such as a T-die and cooled on a cooling drum obtaining a non-oriented film. Said film is pre-heated, for example with a heated metal roll, and then stretched in the length direction between a plurality of rolls over which a difference in peripheral speeds is established and then both edges are gripped with grippers and the sheet is stretched in the transverse direction in an oven by means of a tenter resulting in a biaxially oriented film. The temperature of said film during the longitudinal drawing is preferably controlled in such a way as to be within the temperature range of the melting point of the polypropylene composition.

Subsequently, the biaxially oriented film can be treated by corona discharge in air, nitrogen, carbon dioxide gas or any of the mixtures. If the film should be metallized for film capacitor applications, this enhances the adhesive strength to the metal that is to be deposited.

Capacitor

In another aspect, the present invention relates to a capacitor comprising the biaxially oriented film as described above. Capacitors comprising this biaxially oriented film are expected to have a longer lifetime and a higher temperature resistance than conventional capacitors. Preferably, the biaxially oriented film as described above is metallized and the capacitor is a metalized film capacitor. The metallization of the biaxially oriented film can be performed by any process that is known in the art, for example by evaporation, electrodeposition, melting, ion beam vacuum deposition, sputtering or ion plating. The thickness of the obtained metal layer may be from 100 Å (0.01 $\mu$m) to 5000 Å (0.5 $\mu$m).

In particular embodiments, the capacitor comprises a polypropylene composition which comprises 85.0 or more to 95.0 wt.-% or less, based on the total weight of the polypropylene composition of the high isotactic homopolymer of propylene (A), and 5.0 or more to 15.0 wt.-% or less, based on the total weight of the polypropylene composition of the polybutylene terephthalate (B). The high isotactic homopolymer of propylene (A) has the following properties: a content of isotactic pentad fraction, measured with $^{13}$C NMR, of from 96.0 to 98.5 %; a polydispersity, determined by means of Gel Permeation Chromatography according to ISO 16014-1:2019, of from 8 to 15; and a crystallization temperature (Tc), measured according to ISO 11357, of from 110 °C or more to 140 °C or less, preferably of from 115 °C or more to 140 °C or less, more preferably of from 120 °C or more to 140 °C or less. The polybutylene terephthalate (B) has the following properties: a Izod impact strength, measured according to ASTM D256, of from 45 to 75 J/m; and a density measured according to ISO 1183 of from 1.2 to 1.5 g/cm$^3$, preferably of from 1.3 to 1.4 g/cm$^3$.

**Brief Description of the Drawings**

Embodiments of the present invention are illustrated by way of example and are not limited by the figures of the accompanying drawings.

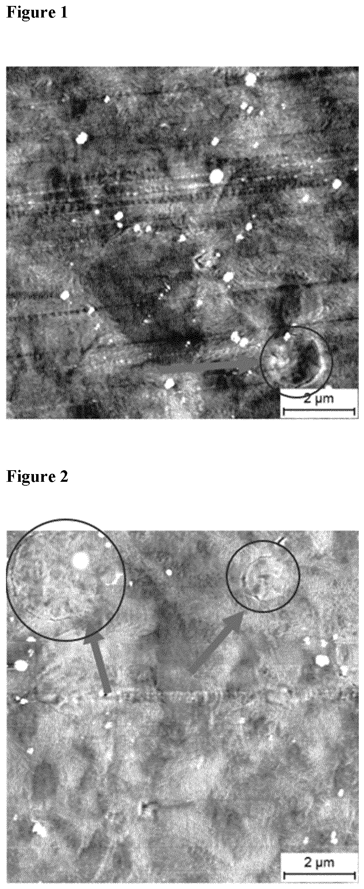

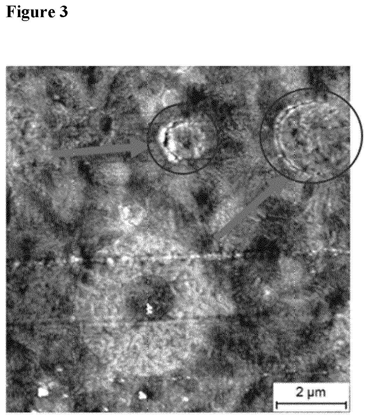

**Figs. 1 to 3** show AFM topography images of the distribution of polybutylene terephthalate particles into the polypropylene matrix of IE1 to IE3, respectively.

**Detailed Description of the Drawings and Examples**

Measurement Methods

*Quantification of isotacticity by NMR spectroscopy*

Quantitative nuclear-magnetic resonance (NMR) spectroscopy was used to quantify the isotacticity of the polymers.

Quantitative $^{13}$C{$^{1}$H} NMR spectra were recorded in the solution-state using a Bruker Advance III 400 NMR spectrometer operating at 400.15 and 100.62 MHz for $^{1}$H and $^{13}$C respectively. All spectra were recorded using a $^{13}$C optimized 10 mm extended temperature probehead at 125 °C using nitrogen gas for all pneumatics.

For polypropylene homopolymers approximately 200 mg of material was dissolved in 1,2-tetrachloroethane-d$_2$ (TCE-d$_2$). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution needed for tacticity distribution quantification (Busico, V., Cipullo, R., Prog. Polym. Sci. 26 (2001) 443; Busico, V.; Cipullo, R., Monaco, G., Vacatello, M., Segre, A.L., Macromoleucles 30 (1997) 6251). Standard single-pulse excitation was employed utilizing the NOE and bi-level WALTZ 16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 8192 (8k) transients were acquired per spectra.

Quantitative $^{13}$C{$^{1}$H} NMR spectra were processed, integrated and relevant quantitative properties determined from the integrals using proprietary computer programs.

For polypropylene homopolymers all chemical shifts are internally referenced to the methyl isotactic pentad <mmmm> at 21.85 ppm.

Characteristic signals corresponding to regio defects (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) were observed.

The tacticity distribution was quantified through integration of the methyl region between 23.6-19.7 ppm correcting for any sites not related to the stereo sequences of interest (Busico, V., Cipullo, R., Prog. Polym. Sci. 26 (2001) 443; Busico, V., Cipullo, R., Monaco, G., Vacatello, M., Segre, A.L., Macromoleucles 30 (1997) 6251).

Specifically, the influence of regio defects on the quantification of the tacticity distribution was corrected for by subtraction of representative regio defect integrals from the specific integral regions of the stereo sequences.

The isotacticity was determined at the pentad level and reported as the percentage of isotactic pentad (mmmm) sequences with respect to all pentad sequences:

$$[mmmm] \% = 100 * ( mmmm \ / \ sum \ of \ all \ pentads )$$

If needed, the absence of ethylene in the high isotactic homopolymer of propylene can be quantified using the method of Wang et. al. (Wang, W-J., Zhu, S., Macromolecules 33 (2000), 1157) through integration of multiple signals across the whole spectral region of a $^{13}C\{^1H\}$ spectra acquired using defined conditions. This method was chosen for its accuracy, robust nature and ability to account for the presence of regio-defects, when needed. Integral regions were slightly adjusted to increase applicability to a wider range of comonomer contents.

The ethylene incorporation in mole percent is computed as follows:

$$E \ [mol\%] = 100 * fE$$

The ethylene incorporation in weight percent is calculated as follows:

$$E \ [wt.-\%] = 100 * ( fE * 28.05 ) / ( (fE * 28.05) + ((1-fE) * 42.08) )$$

*Melt flow rate (MFR)*

The MFR was measured according to ISO 1133 either at a 2.16 kg load and at a temperature of 230 °C (for the high isotactic homopolymer of propylene).

*Crystallization temperature (Tc) and melting temperature (Tm)*

Differential Scanning Calorimetry (DSC) experiments were run on a TA Instruments Q2000 device calibrated with Indium, Zinc, Tin according to ISO 11357/1. The measurements were run under nitrogen atmosphere (50 mL min$^{-1}$) on 5 $\pm$0.5 mg samples in a heat/cool/heat cycle with a scan rate of 10 K/min between -30 °C and 225 °C according to ISO 11357. Crystallization (Tc) and melting (Tm) temperatures were taken as the peaks of the endotherms and exotherms in the cooling cycle and the second heating cycle respectively.

*Polydispersity*

Polydispersity of the polymer, especially the high isotactic polypropylene, is determined by means of Gel Permeation Chromatography according to ISO 16014-1:2019.

*Ash content*

The ash content of the polymer was determined according to measured according to ISO 3451-1 (1997). Doing so, about 100 g of polymer were weighed into a platinum crucible. The crucible is then heated in a Bunsen burner flame so that the polymer slowly burns. After the polymer is completely burned the crucible is cooled, dried and weighed. The ash content is then the weight of the residue divided by the weight of the polymer sample. At least two measurements are made and if the difference between the measurements is more than 7 ppm then a third measurement is made.

*Conductivity*

Electrical conductivity was measured at various temperatures on compression moulded thin films (100 μm thickness) with broadband dielectric spectroscopy (BDS) with an alternating current at a frequency of 10$^{-2}$ Hz.

*Atomic force microscope imaging*

AFM images were collected on strands of the polypropylene composition which have been extruded with a microcompounder (e.g. Xplore MC15HT) under the conditions as outlined later. The strands have been cut on an ultra-cryo microtome in the core and perpendicular to the machine direction (MD). No surface treatment has been performed.

The dimensions of the domains which are formed by component (B) were analyzed with an atomic force microscope (AFM).

In addition to the "normal" scan, a scan with a qualitative amplitude-modulation-frequency-modulation (AM-FM) was run, because the latter gives better differentiation of the different phases. Comparisons were made based on images of 10 x 10 $\mu m^2$ large surface areas of the film.

Materials

The examples were prepared from the following components:

*Component (A)*

Component (A) corresponds to isotactic crystalline polypropylene homopolymers P-CE1 in WO 2013/004781 A1. Those homopolymers were produced using diluent-slurry conditions (reactor cascade of five continuously stirred reactors, CSTR) and a commercial Ziegler Natta catalyst ("Lynx®900"). To achieve a high pentad isotacticity, 2500 ppm (relative to the catalyst) of methyl methacrylate (MMA) were used as a donor. Component (A) has a $MFR_2$ of 3.3 g/10min, a Tm of 164 °C, a Tc of 115 °C, a polydispersity of 9.4, an ash content of less than 20 ppm, and a content of isotactic pentad fraction, measured with $^{13}$C NMR of 97.2%, commercially available as HC300BF from Borealis.

*Component (B)*

Polybutylene terephthalate with an Izod impact strength, measured according to ASTM D256, of from 50 to 70 J/m; and a density measured according to ISO 1183 of from 1.3 to 1.4 $g/cm^3$, commercially available as ES34-GL-000110 from Goodfellow.

Polypropylene compositions

The materials outlined above were combined in the amounts indicated in Table 1 below and melt-blended to form sample polypropylene compositions CE1 and IE1-IE3. The samples were prepared in lab scale using a microcompounder Xplore MC15HT mixing at 230 °C, with 50 rpm and for 3 minutes mixing time. The materials were fed into the microcompounder in pellet form and the melt-blended sample compositions were obtained as extruded strands directly from the microcompounder.

Sample compositions IE1-IE3 are polypropylene compositions comprising a high isotactic homopolymer of propylene and a certain amount of a polybutylene terephthalate. Sample composition CE1 is the pure high isotactic homopolymer of propylene.

**Table 1:** Components of sample compositions CE1 and IE1-IE3.

|            | CE1 | IE1 | IE2 | IE3 |
|------------|-----|-----|-----|-----|
| (A) wt.-%  | 100 | 95  | 90  | 85  |
| (B) wt.-%  | 0   | 5   | 10  | 15  |

Morphological properties were measured on strands of the extruded polypropylene compositions according to the method as described above. AFM images of the films with compositions IE1-IE3 were obtained and are depicted in Figures 1-3. Despite the limited miscibility between PP and PBT and the phase separation, a rather finely dispersed phase of component (B) is achieved for films with the inventive compositions IE1-IE3.

From the strands of the extruded polypropylene compositions samples for DSC were obtained and crystallization and melting temperatures were measured according to the method as described above. The resulting values can be found in Table 2 below.

Table 2: Characteristic temperatures of sample materials CE1 and IE1-IE3.

|  | CE1 °C | IE1 °C | IE2 °C | IE3 °C |
|---|---|---|---|---|
| Crystallization peak temperature | 111.8 | 131.6 | 131.2 | 131.8 |
| Melting temperature | 164.3 | 167.3 | 166.6 | 166.5 |

Here it may be seen that the addition of polybutylene terephthalate increasing the crystallization temperature and may be said to have a nucleating effect on the polypropylene matrix phase.

Films

The polypropylene compositions IE1-IE3 and CE1 were compression moulded into a film using a mould with a thickness of 60 $\mu$m. Electrical properties were measured on the non-oriented compression moulded film (which had a thickness of about 100 $\mu$m after releasing it from the mould) according to the method as described above. The results of the measurements at various temperatures can be found in Table 3 below.

Table 3: Electrical conductivity of sample materials CE1 and IE1-IE3.

| Temperature °C | CE1 $10^{-16}$ S/cm | IE1 $10^{-16}$ S/cm | IE2 $10^{-16}$ S/cm | IE3 $10^{-16}$ S/cm |
|---|---|---|---|---|
| 20 | 9.35 | 1.35 | 1.16 | 4.45 |
| 120 | 23.0 | 7.51 | 18.4 | 22.8 |
| 130 | 107 | 27.0 | 44.2 | 54.8 |
| 140 | 616 | 90.7 | 113 | 145 |

Here, it may be seen that the electrical conductivity of inventive films IE1-IE3 is improved, *i.e.* lowered, relative to the electrical conductivity of the comparative film CE1 at all measured temperatures, including high temperatures above 100 °C.

**Claims**

1.   A polypropylene composition comprising

more than 80.0 to less than 100.0 wt.-%, based on the total weight of the polypropylene composition, of a high isotactic homopolymer of propylene (A), and
more than 0.0 to less than 20.0 wt.-%, based on the total weight of the polypropylene composition, of a polybutylene terephthalate (B).

2.   Polypropylene composition according to claim 1, comprising

more than 80.0 to less than 99.5 wt.-%, preferably more than 82.5 to less than 98.0 wt.-%, more preferably 85.0 or more to 95.0 wt.-% or less, based on the total weight of the polypropylene composition, of the high isotactic homopolymer of propylene (A), and
more than 0.5 to less than 20.0 wt.-%, preferably more than 2.0 to less than 17.5 wt.%, more preferably 5.0 or more to 15.0 wt.-% or less, based on the total weight of the polypropylene composition, of the polybutylene terephthalate (B).

3.   Polypropylene composition according to any one of the preceding claims, wherein the high isotactic homopolymer of propylene (A) has at least one of the following properties:

• a content of isotactic pentad fraction, measured with $^{13}$C NMR, of from 93.0 to 99.5 %, preferably of from 95.0 to 99.0 %, more preferably of from 96.0 to 98.5 %,
• a MFR$_2$ (2.16 kg/230 °C), measured according to ISO 1133, of from 0.4 to 10 g/10 min, preferably of from 0.5 to 5 g/10 min,
• a polydispersity, determined by means of Gel Permeation Chromatography according to ISO 16014-1:2019, of more than 6.5, preferably of more than 7.5 to 20, in particular of from 8 to 15, and
• an ash content, measured according to ISO 3451-1 (1997), of 60 ppm or less, preferably from 5 ppm or more to 30 ppm or less, and
• a crystallization temperature (Tc), measured according to ISO 11357, of from 110 °C or more to 140 °C or less, preferably of from 115 °C or more to 140 °C or less, more preferably of from 120 °C or more to 140 °C or less.

4. Polypropylene composition according to any one of the preceding claims, wherein the polybutylene terephthalate (B) has at least one of the following properties:

   • an Izod impact strength, measured according to ASTM D256, of from 45 to 75 J/m; and
   • a density measured according to ISO 1183 of from 1.2 to 1.5, preferably of from 1.3 to 1.4 g/cm$^3$.

5. Polypropylene composition according to any one of the preceding claims having

   • a crystallization peak temperature, measured according to ISO 11357, of from 115 to 145 °C, preferably of from 120 to 140 °C, more preferably of from 125 to 135 °C; and/or
   • a melting temperature, measured according to ISO 11357, of from 165 to 175 °C, preferably of from 165 to 170 °C.

6. Use of the polypropylene composition according to one of claims 1 to 5 for the preparation of a capacitor film.

7. Film comprising the polypropylene composition according to one of claims 1 to 5.

8. Film according to claim 7, having an electrical conductivity of less than $6.0 \cdot 10^{-14}$ S/cm, preferably less than $5.0 \cdot 10^{-14}$ S/cm, more preferably in a range of from more than $8.0 \cdot 10^{-15}$ S/cm to less than $3.0 \cdot 10^{-14}$ S/cm, wherein the electrical conductivity is measured by means of a dielectric spectrometer with an alternating current at a frequency of $10^{-2}$ Hz at a temperature of 140 °C and on the film having a thickness of 100 $\mu$m.

9. Film according to one of claims 7 or 8, having an electrical conductivity of less than $1.0 \cdot 10^{-14}$ S/cm, preferably less than $9.0 \cdot 10^{-15}$ S/cm, more preferably in a range of from more than $1.0 \cdot 10^{-15}$ S/cm to less than $7.0 \cdot 10^{-15}$ S/cm, wherein the electrical conductivity is measured by means of a dielectric spectrometer with an alternating current at a frequency of $10^{-2}$ Hz at a temperature of 130 °C and on the film having a thickness of 100 $\mu$m.

10. Film according to one of claims 7 to 9, having an electrical conductivity of less than $8.0 \cdot 10^{-16}$ S/cm, preferably less than $5.0 \cdot 10^{-16}$ S/cm, wherein the electrical conductivity is measured by means of a dielectric spectrometer with an alternating current at a frequency of $10^{-2}$ Hz at a temperature of 20 °C and on the film having a thickness of 100 $\mu$m.

11. Film according to one of claims 7 to 10, wherein the average diameter of the domains of the polybutylene terephthalate (B) visually determined in AFM images of 10x10 $\mu$m$^2$ cut-outs of the film with a thickness of 300 $\mu$m is less than 3.5 $\mu$m, preferably in a range of from 0.5 to less than 3.5 $\mu$m, more preferably in a range of from 1.5 to 3.0 $\mu$m.

12. Method for preparing a biaxially oriented film from a non-oriented film comprising the polypropylene composition according to one of claims 1 to 5, wherein the film is stretched with a stretching ratio of at least 2.5 times in the machine direction and a stretching ratio of at least 2.5 times in the transverse direction.

13. Biaxially oriented film comprising the polypropylene composition according to one of claims 1 to 4 or obtained from the film according to one of claims 7 to 11.

14. Capacitor comprising the biaxially oriented film according to claim 13.

15. Capacitor according to claim 14, wherein the polypropylene composition comprises

   85.0 or more to 95.0 wt.-% or less, based on the total weight of the polypropylene composition of the high isotactic homopolymer of propylene (A), and
   5.0 or more to 15.0 wt.-% or less, based on the total weight of the polypropylene composition of the polybutylene terephthalate (B),
   wherein the high isotactic homopolymer of propylene (A) has the following properties:

• a content of isotactic pentad fraction, measured with $^{13}$C NMR, of from 96.0 to 98.5 %,
• a polydispersity, determined by means of Gel Permeation Chromatography according to ISO 16014-1:2019, of from 8 to 15, and
• a crystallization temperature (Tc), measured according to ISO 11357, of from 110 °C or more to 140 °C or less, preferably of from 115 °C or more to 140 °C or less, preferably of from 120 °C or more to 140 °C or less,

and wherein the polybutylene terephthalate (B) has the following properties:

• an Izod impact strength, measured according to ASTM D256, of from 45 to 75 J/m; and
• a density measured according to ISO 1183 of from 1.2 to 1.5 g/cm$^3$, preferably of from 1.3 to 1.4 g/cm$^3$.

**Figure 1**

**Figure 2**

**Figure 3**

Europäisches
Patentamt

European
Patent Office

Office européen
des brevets

## EUROPEAN SEARCH REPORT

**Application Number**

EP 24 20 3254

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 218 355 A2 (MOBIL OIL CORP [US]) 15 April 1987 (1987-04-15) | 1-4,7-13 | INV. C08J5/18 |
| Y | * example 2 * | 15 | C08L23/12 |
| | * claims 1-7, 10, 11, 13 * | | H01G4/18 |
| | ----- | | |
| X | JP H03 252434 A (SUMITOMO CHEMICAL CO) 11 November 1991 (1991-11-11) | 1-5 | |
| Y | * abstract * | 15 | |
| | * examples 1-10; table 1 * | | |
| | ----- | | |
| X | US 5 137 973 A (KHANNA YASH P [US] ET AL) 11 August 1992 (1992-08-11) | 1-5,7-10 | |
| Y | * examples I-IV * | 15 | |
| | * claims 1, 3, 5-9 * | | |
| | ----- | | |
| X | CN 109 742 295 A (JIESHOU TIANHONG NEW MAT CO LTD) 10 May 2019 (2019-05-10) | 1-11,13, 14 | |
| Y | * abstract * | 15 | |
| | * examples 1-9 * | | |
| | * claims 1, 5-7 * | | |
| | ----- | | **TECHNICAL FIELDS SEARCHED (IPC)** |
| X | US 2012/157598 A1 (SONG KWANGJIN [US] ET AL) 21 June 2012 (2012-06-21) | 1-14 | C08J |
| Y | * paragraphs [0003], [0069] * | 15 | H01G |
| | * Comp. Ex. 1 * | | C08L |
| | ----- | | |
| X | WO 2018/015341 A1 (OMYA INT AG [CH]) 25 January 2018 (2018-01-25) | 1-14 | |
| Y | * examples 10-15 * | 15 | |
| | * claims 1, 11, 21, 22 * | | |
| | ----- | | |
| A | US 2009/191388 A1 (MCLEOD MICHAEL ALLEN [US] ET AL) 30 July 2009 (2009-07-30) * claims 1, 17 * | 1-15 | |
| | ----- | | |
| Y | US 2023/265270 A1 (REZNICHENKO ALEXANDER [FI] ET AL) 24 August 2023 (2023-08-24) * examples IE1, IE2 * * claims 1, 5, 8 * | 15 | |
| | ----- | | |

The present search report has been drawn up for all claims

| Place of search | Date of completion of the search | Examiner |
|---|---|---|
| Munich | 5 March 2025 | Vandoolaeghe, P |

EPO FORM 1503 03.82 (P04C01)

## ANNEX TO THE EUROPEAN SEARCH REPORT
## ON EUROPEAN PATENT APPLICATION NO.

EP 24 20 3254

This annex lists the patent family members relating to the patent documents cited in the above-mentioned European search report.
The members are as contained in the European Patent Office EDP file on
The European Patent Office is in no way liable for these particulars which are merely given for the purpose of information.

05-03-2025

| Patent document cited in search report | | Publication date | Patent family member(s) | | Publication date |
|---|---|---|---|---|---|
| EP 0218355 | A2 | 15-04-1987 | AT | E93253 T1 | 15-09-1993 |
| | | | AU | 6105786 A | 05-03-1987 |
| | | | BR | 8604184 A | 28-04-1987 |
| | | | CA | 1282889 C | 09-04-1991 |
| | | | DE | 3688902 T2 | 09-12-1993 |
| | | | EP | 0218355 A2 | 15-04-1987 |
| | | | ES | 2001288 A6 | 01-05-1988 |
| | | | HK | 1006846 A1 | 19-03-1999 |
| | | | PH | 21803 A | 29-02-1988 |
| | | | US | 4632869 A | 30-12-1986 |
| JP H03252434 | A | 11-11-1991 | NONE | | |
| US 5137973 | A | 11-08-1992 | NONE | | |
| CN 109742295 | A | 10-05-2019 | NONE | | |
| US 2012157598 | A1 | 21-06-2012 | US | 2012157598 A1 | 21-06-2012 |
| | | | WO | 2010059343 A1 | 27-05-2010 |
| WO 2018015341 | A1 | 25-01-2018 | AR | 109115 A1 | 31-10-2018 |
| | | | BR | 112018077481 A2 | 02-04-2019 |
| | | | CA | 3029923 A1 | 25-01-2018 |
| | | | CN | 109476133 A | 15-03-2019 |
| | | | EP | 3272524 A1 | 24-01-2018 |
| | | | EP | 3487700 A1 | 29-05-2019 |
| | | | ES | 2792090 T3 | 10-11-2020 |
| | | | JP | 7454375 B2 | 22-03-2024 |
| | | | JP | 2019524935 A | 05-09-2019 |
| | | | JP | 2022084591 A | 07-06-2022 |
| | | | KR | 20190034235 A | 01-04-2019 |
| | | | RU | 2019104757 A | 21-08-2020 |
| | | | TW | 201803931 A | 01-02-2018 |
| | | | US | 2019218352 A1 | 18-07-2019 |
| | | | WO | 2018015341 A1 | 25-01-2018 |
| US 2009191388 | A1 | 30-07-2009 | CN | 102089148 A | 08-06-2011 |
| | | | EP | 2237953 A1 | 13-10-2010 |
| | | | JP | 2011511108 A | 07-04-2011 |
| | | | KR | 20100105539 A | 29-09-2010 |
| | | | US | 2009191388 A1 | 30-07-2009 |
| | | | US | 2012196982 A1 | 02-08-2012 |
| | | | WO | 2009097375 A1 | 06-08-2009 |
| US 2023265270 | A1 | 24-08-2023 | CN | 115667380 A | 31-01-2023 |
| | | | CN | 119410000 A | 11-02-2025 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 24 20 3254

This annex lists the patent family members relating to the patent documents cited in the above-mentioned European search report.
The members are as contained in the European Patent Office EDP file on
The European Patent Office is in no way liable for these particulars which are merely given for the purpose of information.

05-03-2025

| Patent document cited in search report | Publication date | Patent family member(s) | | Publication date |
|---|---|---|---|---|
| | | EP | 4157928 A1 | 05-04-2023 |
| | | EP | 4525012 A2 | 19-03-2025 |
| | | JP | 7520151 B2 | 22-07-2024 |
| | | JP | 2023527024 A | 26-06-2023 |
| | | KR | 20230008136 A | 13-01-2023 |
| | | US | 2023265270 A1 | 24-08-2023 |
| | | WO | 2021239594 A1 | 02-12-2021 |

For more details about this annex : see Official Journal of the European Patent Office, No. 12/82

EPO FORM P0459

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101724195 A
- EP 2995641 A1
- WO 2018210854 A1
- WO 2018197034 A1
- EP 24181730 A
- CN 105837951 A
- US 3511824 A
- WO 2013004781 A1

**Non-patent literature cited in the description**

- **BUSICO, V.** ; **CIPULLO, R.** *Prog. Polym. Sci.*, 2001, vol. 26, 443
- **BUSICO, V.** ; **CIPULLO, R.** ; **MONACO, G.** ; **VACATELLO, M** ; **SEGRE, A.L.** *Macromoleucles*, 1997, vol. 30, 6251
- **ZHOU, Z** ; **KUEMMERLE, R.** ; **QIU, X.** ; **REDWINE, D.** ; **CONG, R.** ; **TAHA, A.** ; **BAUGH, D. WINNIFORD, B.** *J. Mag. Reson.*, 2007, vol. 187, 225
- **BUSICO, V.** ; **CARBONNIERE, P.** ; **CIPULLO, R.** ; **PELLECCHIA, R.** ; **SEVERN, J.** ; **TALARICO, G.** *Macromol. Rapid Commun.*, 2007, vol. 28, 11289
- **RESCONI, L.** ; **CAVALLO, L.** ; **FAIT, A.** ; **PIEMONTESI, F.** *Chem. Rev.*, 2000, vol. 100, 1253
- **WANG, W-J.** ; **ZHU, S.** *Macromolecules*, 2000, vol. 33, 1157
- **CHENG, H. N.** *Macromolecules*, 1984, vol. 17, 1950
- **BUSICO, V.** ; **CIPULLO, R.** ; **MONACO, G.** ; **VACATELLO, M.** ; **SEGRE, A.L.** *Macromoleucles*, 1997, vol. 30, 6251